# EUROPÄISCHE PATENTSCHRIFT

(11) **EP 2 791 044 B1**
(45) Veröffentlichungstag und Bekanntmachung des Hinweises auf die Patenterteilung: **23.03.2016**
(21) Anmeldenummer: 12809153.5
(22) Anmeldetag: 07.12.2012
(51) Int. Cl.: B66B 15/04, B66B 5/00

(54) **TREIBSCHEIBENKLEMMVORRICHTUNG**
TRACTION SHEAVE CLAMPING DEVICE
DISPOSITIF DE SERRAGE DE POULIE MOTRICE

(30) Priorität: 16.12.2011 DE 102011121458
(43) Veröffentlichungstag der Anmeldung: 22.10.2014
(73) Patentinhaber: Siemag Tecberg GmbH, 35708 Haiger (DE)
(72) Erfinder: SCHUBERT, Wolfgang, 57250 Netphen (DE); HOFMANN, Klaus, 57250 Netphen (DE); SONNEBORN, Stephan, 57334 Bad Laasphe (DE)
(74) Vertreter: Harrison, Robert John
(86) Internationale Anmeldenummer: PCT/EP2012/074851
(87) Internationale Veröffentlichungsnummer: WO 2013/087540

(56) Entgegenhaltungen:
- EP-A2- 1 591 406
- FR-A1- 2 000 108
- JP-A- 10 087 220

## Beschreibung

Die vorliegende Erfindung bezieht sich auf eine Treibscheibenklemmvorrichtung zur lösbaren Fixierung von Seilen an der Treibescheibe einer Koepe- Fördermaschine, wie durch den Oberbegriff des unabhängigen Anspruches 1 beschrieben.

Es ist eine bekannte Vorgehensweise, bei Koepe Fördermaschinen das Seil bzw. die Seile für Wartungszwecke gelegentlich über ein oder mehrere Treibscheibenklemmen fest mit der Treibscheibe der Koepe Fördermaschine zu verbinden.

Siehe zum beispiel FR 2000 108 A1.

Dazu sind an den äußeren Stirnseiten der Treibscheibe bzw. der Seilfutterkranzbleche in der Regel keilig geformte umlaufende Nuten vorgesehen, in die die Treibscheibenklemmen über Verankerungsstücke eingreifen und mittels Schraubbolzen verspannt werden.

Die bekannten Verankerungsstücke zeigen in der praktischen Anwendung, dass je nach geometrischer Ausführung aus der internen Abstützung der Verankerungsstücke heraus ein Drehmoment auf die Klemmschraube entstehen und zum Verbiegen der Schraube führen kann, wenn ungünstige Reibungsverhältnisse herrschen und/oder unsachgemäße Montage erfolgt.

Die Aufgabe der vorliegenden Erfindung ist es nun, eine Treibscheibenklemmvorrichtung vorzusehen, die die Nachteile des bekannten Standes der Technik behebt und die sich einfach und wirtschaftlich herstellen und betreiben lässt.

Diese Aufgabe wird durch die Merkmale des unabhängigen Patentanspruches 1 gelöst, wobei zweckmäßige Ausführungsformen durch die Merkmale der abhängigen Ansprüche beschrieben sind.

Vorgesehen ist dabei eine Treibscheibenklemmvorrichtung zur lösbaren Fixierung von Seilen an der Treibescheibe einer Koepe- Fördermaschine, mit zumindest einer Klemmentraverse, mit deren Hilfe das Seil fixiert wird, zumindest zwei Verankerungsstücken zum Eingriff in keilig oder alternativ hackenförmig umlaufende Nuten in den Stirnseiten der Treibscheibe/Seilfutterkranzbleche, sowie Schraubbolzen zur Verbindung der Verankerungsstücke mit der Klemmtraverse, wobei die Verankerungsstücke sowie die Treibscheiben korrespondierende, sich im Wesentlichen in Zugrichtung der Schraubbolzen erstreckende Drehmomentstützflächen aufweisen, deren Erstreckung in Zugrichtung der Schraubbolzen ein Vielfaches des Abstandes der Schraubbolzenmittelachse zum Verankerungspunkt beträgt.

Durch die Gestaltung des Verankerungsstücks in der beschrieben Art und Weise erreicht man, dass sich ein entstehendes Drehmoment besser im Verankerungsstück abstützt, so dass auf den Schraubbolzen möglichst kein Drehmoment aufgebracht wird.

In einer bevorzugten Ausführungsform der Erfindung können die Drehmomentstützflächen in zumindest zwei Teilstützflächen unterteilt sein, z.B. in Form eine Abknickung, so das sich im Zusammenspiel mit dem Eingriff des Verankerungsstücks in die jeweilig umlaufende Nut ein erweiterter formschlüssiger Eingriff des Verankerungsstücks mit der Treibscheibe bzw. dessen Seilfutterkranzblech ergibt, der eine nochmal erhöhte Drehmomentstabilität mit sich bringt.

Weiterhin bevorzugt ist es vorgesehen, dass die jeweiligen Schraubbolzenmittelachsen bzw. die Hauptkraftrichtung derselben in Flucht mit dem Verankerungspunkt des jeweiligen Verankerungsstücks angeordnet sind, so dass die Biegebeanspruchung der Klemmschraube verhindert bzw. minimiert wird.

Um Fertigungstoleranzen berücksichtigen zu können, können ggf. auch kugelbewegliche Unterlegscheiben unter der spannenden Mutter eingesetzt werden.

Weitere Eigenschaften und Vorteile der Erfindung ergeben sich aus der folgenden, rein demonstrativen und in keiner Wiese beschränkenden, Beschreiben bevorzugter Ausführungsformen der Erfindung unter Bezugnahme auf die beigefügten Zeichnungen; darin zeigt:
Fig. 1 einen Querschnitt durch eine Teilansicht einer bevorzugten Ausführungsform einer Treibscheibenklemmvorrichtung gemäß der Erfindung;
Fig. 2 eine Variante der Ausführungsform nach Fig. 1;
Fig. 3 einen Querschnitt durch eine Teilansicht einer zweiten bevorzugten Ausführungsform einer Treibscheibenklemmvorrichtung gemäß der Erfindung; und
Fig. 4 eine Variante der Ausführungsform nach Fig. 3.

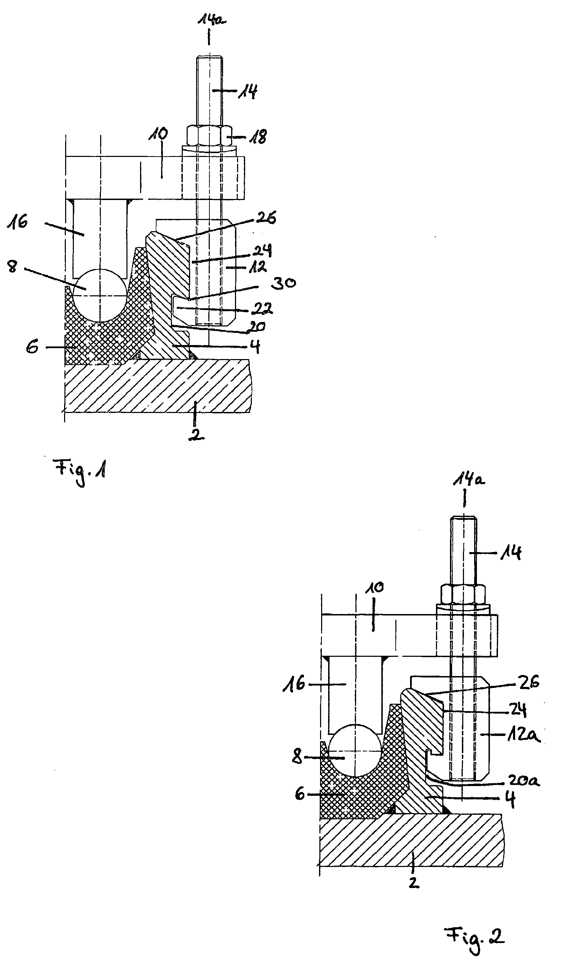

Die Fig. 1 zeigt einen Querschnitt durch eine Teilansicht einer bevorzugten Ausführungsform einer Treibscheibenklemmvorrichtung gemäß der Erfindung. Zu erkennen ist dabei ein Ausschnitt einer Treibscheibe 2, auf der ein Seilfutterkranzblech 4 angeordnet ist, sowie ein Seilfutter 6 selbst, in dem das Seil 8 geführt ist. Des Weiteren entnimmt man der Fig. 1 eine Treibscheibenklemmvorrichtung mit einer Klemmentraverse 10, einem Verankerungsstück 12 sowie ein Schraubbolzen 14 zur Verbindung des Verankerungsstücks 12 mit der Klemmtraverse 10.

Die Klemmtraverse 10 ist, wie ebenfalls der Fig. 1 zu entnehmen ist, an ihrer Unterseite mit einem Klemmvorsprung 16 versehen, der, wenn die Schraubbolzen 14 mittels der Mutter 18 angezogen werden, auf das Seil 8 drücken und dieses in dem Seilfutter 6 fixieren.

Wie der Fig. 1 weiterhin zu entnehmen ist, weisen das Seilfutterkranzblech bzw. die Treibscheibe an ihrer äußeren Stirnseite eine keilig umlaufend Nut 20 auf, in welche eine Ankernase 22 des Verankerungsstücks 12 eingreift, wobei in der in Fig. 1 dargestellten Ausführungsform ein konischer Eingriff der Ankernase 22 erfolgt, woraus sich ein Verankerungspunkt 30 ergibt.

Oberhalb der Ankernase 22 erstrecken sich Drehmomentstützflächen 24 und 26, die korrespondierend sowohl am Seilfutterkranzblech 4, als auch am Verankerungsstück 12 vorgesehen sind. Wie zu erkennen ist, beträgt die Erstreckung dieser Drehmomentstützflächen in Zugrichtung der Schraubbolzen dabei ein Vielfaches des Abstandes der Schraubbolzenmittelachse 14a zu den Drehmomentstützflächen 24, 26, so dass auf den Schraubbolzen 14 einwirkende Dreh- oder Biegemomente vermieden werden können.

Fig. 2 zeigt eine Variante der Ausführungsform nach Fig. 1, wobei der einzige Unterschied darin besteht, dass die umlaufende Nut 20a hakenförmig bzw. flach und nicht keilig bzw. konisch ist, wobei entsprechend auch die Ankernase 22a des Verankerungsstückes 12a flach bzw. hakenförmig ausgebildet ist.

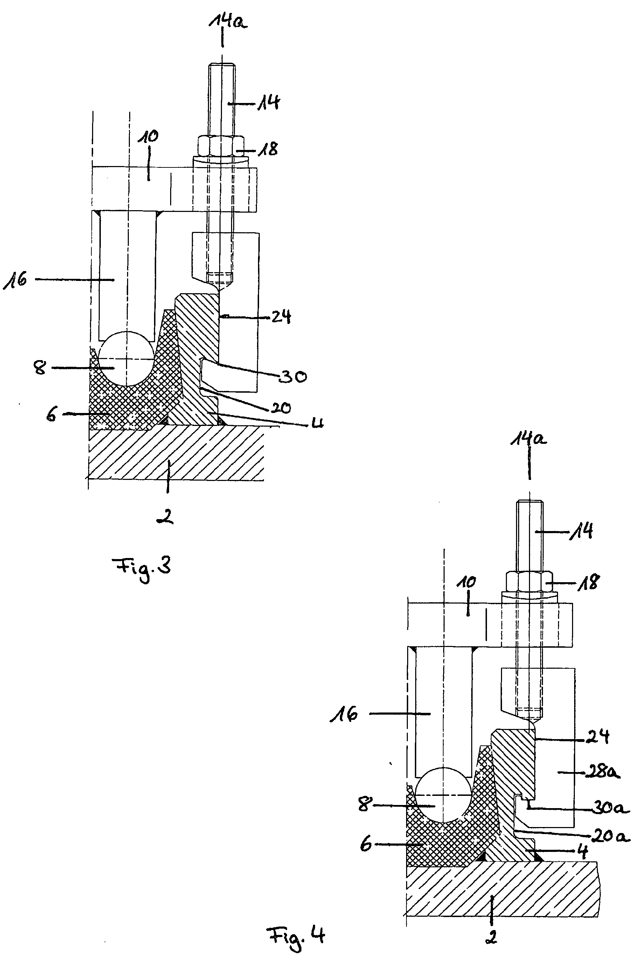

Die Fig. 3 zeigt einen Querschnitt durch eine Teilansicht einer weiteren bevorzugten Ausführungsform einer Treibscheibenklemmvorrichtung gemäß der Erfindung, wobei der Fig. 1 entsprechende Elemente auch mit entsprechenden Bezugszeichen versehen sind.

Bei der Ausführungsform der Fig. 3 ist ein abgewandeltes Verankerungsstück 28 vorgesehen, das zusammen mit dem Seilfutterkranzblech 4 nur eine korrespondierende Drehmomentstützfläche 24 zeigt. Gleichzeitig ist die Mittelachse des Schraubbolzens 14a derart angeordnet, dass die Hauptkraftrichtung in Flucht mit dem Verankerungspunkt 30 angeordnet ist. Auf diese Weise können Dreh- oder Biegemomente auf den Schraubbolzen 14 vollständig eliminiert werden.

Die Fig. 4 schließlich zeigt eine Variante der Ausführungsform nach Fig. 3, wobei lediglich die Art der Verankerung des verkröpften Verankerungsstücks 28a im Seilfutterkranzblech 4 verändert ist, die im Fall der Ausführungsform der Fig. 4 flach, bzw. hakenförmig ist und nicht, wie in der Fig. 3, konisch. Aufgrund dessen wandert auch der Verankerungspunkt 30a nach innen, so dass auch die Mittelachse 14a des Schraubbolzens 14 wandert, damit sie fluchtend mit dem Verankerungspunkt 30a angeordnet ist.

## Patentansprüche

1. Treibscheibenklemmvorrichtung zur lösbaren Fixierung von Seilen an der Treibescheibe einer Koepe-Fördermaschine, mit zumindest einer Klemmentraverse (10), zumindest zwei Verankerungsstücken (12, 12a, 28, 28a) zum Eingriff umlaufende Nuten (20, 20a) in den Stirnseiten der Treibscheibe, sowie Schraubbolzen (14) zur Verbindung der Verankerungsstücke (12, 28) mit der Klemmtraverse (10), wobei die Verankerungsstücke (12, 12a, 28, 28a) sowie die Treibscheiben korrespondierende, sich im Wesentlichen in Zugrichtung der Schraubbolzen (14) erstreckende Drehmomentstützflächen (24, 26) aufweisen, **dadurch gekennzeichnet, dass** die Erstreckung der Drehmomentstützflächen (24, 26) in Zugrichtung der Schraubbolzen (14) ein Vielfaches des Abstandes der Schraubbolzenmittelachse (14a) zum Verankerungspunkt (30, 30a) beträgt.

2. Treibscheibenklemmvorrichtung nach Anspruch 1, **dadurch gekennzeichnet, dass** die Drehmomentstützflächen (24, 26) in zumindest zwei Teilstützflächen unterteilt sind.

3. Treibscheibenklemmvorrichtung nach Anspruch 1 oder 2, **dadurch gekennzeichnet, dass** die Schraubbolzenmittelachsen (14a) in Flucht mit dem Verankerungspunkt (30, 30a) des jeweiligen Verankerungsstücks (12, 28) angeordnet sind.

4. Treibscheibenklemmvorrichtung nach einem der vorhergehenden Ansprüche, **dadurch gekennzeichnet, dass** die umlaufenden Nuten (20) keilig ausgebildet sind.

5. Treibscheibenklemmvorrichtung nach einem der Ansprüche 1 bis 3, **dadurch gekennzeichnet, dass** die umlaufenden Nuten (20a) hakenförmig ausgebildet sind.

## Claims

1. A traction sheave clamping device for detachably fixing ropes to the traction sheave of a Koepe hoist, having at least one clamp crossbeam (10), at least two anchoring elements (12, 12a, 28, 28a) for engaging in circumferential grooves (20, 20a) in the face sides of the traction sheave, and stud bolts (14) for connecting the anchoring elements (12, 28) to the clamp crossbeam (10), wherein the anchoring elements (12, 12a, 28, 28a) and the traction sheave have corresponding torque support surfaces (24, 26) extending substantially in the pull direction of the stud bolts (14),
**characterized in that**
the extension of the torque support surfaces(24, 26) in the pull direction of the stud bolts (14) is a multiple of the distance between the stud bolt center axis (14a) and the anchoring point (30, 30a).

2. Traction sheave clamping device according to claim 1, **characterized in that** the torque support surfaces (24, 26) are divided in at least two partial support surfaces.

3. Traction sheave clamping device according to claims 1 or 2, **characterized in that** the stud bolt center axes (14a) are aligned with the anchoring point (30, 30a) of the respective anchoring element (12, 28).

4. Traction sheave clamping device according to any of the preceding claims, **characterized in that** the circumferential grooves (20) are wedge shaped.

5. Traction sheave clamping device according to any of claims 1 to 3, **characterized in that** the circumferential grooves (20a) are hook shaped.

## Revendications

1. Dispositif de serrage de poulie de traction pour fixation amovible de câbles à la poulie de traction d'une machine de transport du type Koepe, avec au moins une traverse de serrage (10), au moins deux éléments d'ancrage (12, 12a, 28, 28a) pour engagement avec des rainures (20, 20a) périphériques dans les faces de front de la poulie de traction, ainsi que des boulons filetés (14) pour liaison des éléments d'ancrage (12, 28) avec la traverse de serrage (10), dans lequel les éléments d'ancrage (12, 12a, 28, 28a) ainsi que la poulie de traction comprennent des surfaces de support de couple (24, 26) correspondantes, s'étendant sensiblement dans la direction de traction des boulons filetés (14), **caractérisé en ce que** l'extension des surfaces de support de couple (24, 26) dans la direction de traction des boulons filetés (14) s'élève à un multiple de la distance entre l'axe central de boulon fileté (14a) et le point d'ancrage (30, 30a).

2. Dispositif de serrage de poulie de traction selon la revendication 1, **caractérisé en ce que** les surfaces de support de couple (24, 26) sont divisées en au moins deux surfaces de support partielles.

3. Dispositif de serrage de poulie de traction selon la revendication 1 ou 2, **caractérisé en ce que** les axes centraux de boulons filetés (14a) sont alignés avec le point d'ancrage (30, 30a) des éléments d'ancrages respectifs (12, 28).

4. Dispositif de serrage de poulie de traction selon l'une quelconque des revendications précédentes, **caractérisé en ce que** les rainures périphériques (20) sont en forme de coin.

5. Dispositif de serrage de poulie de traction selon l'une quelconque des revendications 1 à 3, **caractérisé en ce que** les rainures périphériques (20a) sont formées en forme de crochet.
